(19) **Europäisches Patentamt**
**European Patent Office**
**Office européen des brevets**

(11) **EP 1 760 929 B1**

(12) **EUROPÄISCHE PATENTSCHRIFT**

(45) Veröffentlichungstag und Bekanntmachung des Hinweises auf die Patenterteilung:
**09.06.2010 Patentblatt 2010/23**

(51) Int Cl.:
*H04L 9/06* *(2006.01)*　　*H04L 9/30* *(2006.01)*
*G06F 7/72* *(2006.01)*　　*G07F 7/10* *(2006.01)*

(21) Anmeldenummer: **06016716.0**

(22) Anmeldetag: **10.08.2006**

(54) **Geschütztes kryptographisches Verfahren**

Protected cryptographic method

Procede cryptografique protege

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.08.2005 DE 102005038228**

(43) Veröffentlichungstag der Anmeldung:
**07.03.2007 Patentblatt 2007/10**

(73) Patentinhaber: **Giesecke & Devrient GmbH**
**81677 München (DE)**

(72) Erfinder: **Kahl, Helmut, Dr.**
**80992 München (DE)**

(74) Vertreter: **Dendorfer, Claus**
**Dendorfer & Herrmann**
**Patentanwälte Partnerschaft**
**Bayerstrasse 3**
**80335 München (DE)**

(56) Entgegenhaltungen:
**WO-A-2004/032411　　DE-A1- 10 328 860**
**DE-A1-102004 001 659**

**Beschreibung**

Die Erfindung betrifft allgemein das technische Gebiet der kryptographischen Verfahren und spezieller eine Technik zum verbesserten Schutz eines kryptographischen Verfahrens gegen Angriffe. Insbesondere ist die Erfindung zum Einsatz in tragbaren Datenträgern vorgesehen, die z.B. als Chipkarten *(smart cards)* in unterschiedlichen Bauformen oder als Chipmodule *(smart tokens)* ausgestaltet sein können.

Für den Austausch von verschlüsselten und/oder signierten Daten ist das z.B. im US-Patent 4,405,829 beschriebene RSA-Verfahren gut bekannt. Gemäß dem RSA-Verfahren wird ein öffentlicher Schlüssel zur Verschlüsselung oder Signaturverifikation und ein geheimer privater Schlüssel zur Entschlüsselung oder Signaturerzeugung eingesetzt. Die Sicherheit des RSA-Verfahrens beruht auf der Tatsache, daß gegenwärtig kein effizienter Weg bekannt ist, um die Primfaktoren $p$ und $q$ einer großen Zahl $n$ mit $n = p \cdot q$ zu bestimmen. Während der sogenannte Modulus $n$ als Teil des öffentlichen Schlüssels veröffentlicht wird, müssen die Werte $p$ und $q$ geheim gehalten werden.

Die zur Ausführung des RSA-Verfahrens erforderlichen Berechnungsvorgänge sind relativ aufwändig. Insbesondere für tragbare Datenträger mit ihrer beschränkten Rechenleistung wird daher häufig eine Implementierung des RSA-Verfahrens zur Entschlüsselung oder Signaturerzeugung eingesetzt, die den Chinesischen Restklassensatz (CRT = *Chinese remainder theorem)* verwendet und daher auch als RSA-CRT-Verfahren bezeichnet wird. Durch Verwendung des RSA-CRT-Verfahrens wird der erforderliche Rechenaufwand ungefähr um den Faktor 4 reduziert.

Das RSA-CRT-Verfahren sieht vor, statt einer aufwändigen Potenzberechnung zwei Verfahrenszweige mit je einer erheblich einfacheren Potenzierung durchzuführen, deren Ergebnisse dann zu den entschlüsselten Daten oder der erzeugten Signatur kombiniert werden. In den ersten dieser Verfahrenszweige geht nur der geheime Primfaktor $p$ ein, und in den zweiten Verfahrenszweig geht nur der geheime Primfaktor $q$ ein.

Es sind Angiffsszenarien vorgeschlagen worden, bei denen genau einer der beiden genannten RSA-CRT-Verfahrenszweige von außen gestört wird, z.B. durch gezielte Einwirkung von Wärme oder Strahlung oder durch elektrische Impulse. Wenn dies gelingt, läßt sich aus dem Endergebnis des RSA-CRT-Verfahrens ein Vielfaches desjenigen Primfaktors $p, q$ ableiten, dessen zugehöriger Verfahrenszweig gestört wurde. Mit anderen Worten lassen sich durch den beschriebenen Angriff Rückschlüsse auf den privaten Schlüssel ziehen. Dies hat potentiell katastrophale Konsequenzen, weil nicht nur die gerade durchgeführte Entschlüsselung oder Signaturerzeugung, sondern alle unter Verwendung des privaten Schlüssels ausgeführten kryptographischen Operationen kompromittiert werden.

Besonders kritisch sind Angriffe wie die oben genannten dann, wenn das kryptographische Verfahren von einem Prozessor eines tragbaren Datenträgers ausgeführt wird. Ein erster Grund dafür ist, daß solche Datenträger oft für sicherheitskritische Anwendungen verwendet werden, z.B. im Zusammenhang mit Finanztransaktionen, der Zugangskontrolle oder der Signatur von rechtlich bindenden Dokumenten. Zweitens befinden sich tragbare Datenträger, während das kryptographische Verfahren ausgeführt wird, typischerweise im Besitz des Angreifers, so daß dieser alle Möglichkeiten zum Beeinflussen des Verfahrens und zum Ausspähen der Ergebnisse hat.

Der gerade erwähnte Angiff ist unter den Namen "*fault attack*" (Fehlerangriff) oder "*Bellcore attack*" bekannt und z.B. in Spalte 4 des US-Patents 5,991,415 beschrieben. Weiterentwicklungen dieses Angriffs, bei denen Fehler in einer Vielzahl von Berechnungsabläufen hervorgerufen und die Ergebnisse systematisch ausgewertet werden, sind als "*DFA attack*" (DFA = *differential fault analysis* = differenzielle Fehleranalyse) bekannt. Die differenzielle Fehleranalyse ist nicht nur für das RSA-CRT-Verfahren, sondern für viele andere kryptographische Verfahren eine wirksame Angriffstechnik. Im vorliegenden Dokument soll der Bergriff "Fehleranalysen-Angriff" sowohl den Bellcore-Angriff als auch DFA-Angriffe umfassen.

Die Offenlegungsschrift DE 102004001659 bezieht sich auf asymmetrische Kryptosysteme, die gegenüber Fehlerattachen abgesichert sind.

Aus WO 2004/0342411 A1 ist eine Sicherungsmöglichkeit gegen Fehleranalysen-Angriffe beschrieben, bei der eine Integritätsüberprüfung des Schlüssels durchgeführt wird, indem beispielsweise überprüft wird, ob zwei Schlüsselparameter glatt durcheinander teilbar sind. Wenn bei der Integritätsüberprüfung eine Manipulation des Schlüssels festgestellt wird, dann wird das Verfahren mit einem Fehleraussprung abgebrochen. In diesem Fall erzeugt das Verfahren keine Ausgabe, die von einem Angreifer ausgewertet werden könnte.

Bei dem aus WO 2004/0342411 A1 bekannten Verfahren besteht jedoch das Problem, dass es einem Angreifer möglicherweise gelingen könnte, die Zeitpunkte vorherzusagen, zu denen der Datenträger die Prüfschritte und die bedingten Sprungbefehle für den Fehleraussprung ausführt. Dies kann beispielsweise durch an sich bekannte Zeitanalyse- und SPA-Techniken (SPA = *simple power analysis* = einfache Leistungsanalyse) erfolgen, bei denen die Stromaufnahme oder die elektromagnetische Abstrahlung oder andere Signalformen des Datenträgers ausgewertet werden. Wenn ein Angreifer weiß, wann der Datenträger z.B. einen bedingten Sprungbefehl zum Fehleraussprung ausführt, kann der Angreifer durch Hervorrufen einer zweiten Störung genau zu diesem Zeitpunkt möglicherweise den Fehleraussprung verhindern. Der Datenträger würde dann das Verfahren mit dem gestörten Schlüsselparameter fortsetzen und ein die Sicherheit des kryptographischen Verfahrens kompromittierendes Ergebnis liefern.

Die Erfindung hat demgemäß die Aufgabe, eine Technik zum besonders guten Schutz kryptographischer Verfahren gegen Angriffe bereitzustellen. In bevorzugten Ausgestaltungen sollen Angriffe verhindert werden, bei denen der Angreifer eine erste und eine zweite Störung verursacht, wobei die erste Störung einen Fehleranalysen-Angriff ermöglicht und die zweite Störung einen an sich vorgesehenen Fehleraussprung unwirksam macht.

Erfindungsgemäß wird diese Aufgabe ganz oder zum Teil gelöst durch ein kryptographisches Verfahren mit den Merkmalen des Anspruchs 1, ein Computerprogrammprodukt gemäß Anspruch 16 und einen tragbaren Datenträger gemäß Anspruch 17. Die abhängigen Ansprüche definieren optionale Merkmale mancher Ausgestaltungen der Erfindung.

Die Erfindung geht von der Grundidee aus, im Verlauf des kryptographischen Verfahrens mindestens ein Prüfresultat zu ermitteln und dieses Prüfresultat derart in die Berechnung eines Verfahrensergebnisses einfließen zu lassen, dass das Ergebnis verfälscht wird, wenn das Prüfresultat auf eine gestörte Verfahrensausführung hinweist. Ein Angreifer erhält dann aus dem verfälschten Ergebnis kleine für einen Fehleranalysen-Angriff verwertbaren Informationen.

In bevorzugten Ausgestaltungen werden bei der Ermittlung des Prüfresultats Fallunterscheidungen und/oder bedingte Sprungbefehle vermieden, um keine Möglichkeit zur Manipulation des Programmflusses durch weitere Störungen zu schaffen. Beispielsweise kann das Prüfresultat ein numerisches Prüfresultat sein, bei dem mindestens ein Wert für einen ungestörten Verfahrensablauf steht und mindestens ein anderer Wert - in vielen Ausgestaltungen alle anderen Werte - eine Störung signalisiert. Ein solches Prüfresultat wird in manchen Ausführungsformen durch geeignete arithmetische Berechnungen - z.B. eine Teilbarkeitsprüfung oder eine Prüfsummenberechnung - ermittelt. Beispielsweise kann das Prüfresultat Informationen über die Integrität eines für das kryptographische Verfahren verwendeten Schlüssels enthalten.

Das Prüfresultat kann in manchen Ausgestaltungen als Operand einer arithmetischen Operation in die Bestimmung des Ergebnisses und/oder eines auf das Ergebnis weisenden Adress- oder Indexwertes eingehen. Auch bei diesen Operationen wird vorzugsweise auf Fallunterscheidungen und/oder bedingte Sprungbefehle verzichtet.

In manchen Ausführungsformen kann das Verfahren konzeptuell in zwei oder mehr Verfahrenszweige untergliedert werden, in denen z.B. je ein Schlüsselparameter - nicht aber ein jeweils anderer Schlüsselparameter - verwendet wird. Vorzugsweise wird in solchen Ausführungsformen, wenn in einem Verfahrenszweig eine Störung festgestellt wurde, das Ergebnis des anderen Verfahrenszweiges oder der anderen Verfahrenszweige verfälscht. Es versteht sich, dass die den einzelnen Verfahrenszweigen zugeordneten Operationen beliebig ineinander verzahnt (*interleaved*) ausgeführt werden können.

Das erfindungsgemäße Verfahren ist für diverse kryptographische Berechnungen geeignet, die gegen Fehleranalysen-Angriffe geschützt werden sollen. Insbesondere ist die Erfindung für die Sicherung der Entschlüsselung oder Signaturerzeugung bei einem RSA-Verfahren, vorzugsweise bei einem RSA-CRT-Verfahren, vorgesehen.

Das erfindungsgemäße Computerprogrammprodukt kann ein körperliches Medium sein, beispielsweise ein Halbleiterspeicher oder eine Diskette oder eine CD-ROM, auf dem Programmbefehle zur Ausführung des erfindungsgemäßen Verfahrens gespeichert sind. Das Computerprogrammprodukt kann jedoch auch ein nicht-körperliches Medium sein, beispielsweise ein über ein Computernetzwerk übermitteltes Signal. Das Computerprogrammprodukt kann insbesondere zur Verwendung im Zusammenhang mit der Herstellung und/oder Initialisierung und/oder Personalisierung von Datenträgern oder zur Verwendung im Zusammenhang mit dem Nachladen von Programmen in Datenträger vorgesehen sein.

In bevorzugten Ausgestaltungen sind das Computerprogrammprodukt und/ oder der tragbare Datenträger mit Merkmalen weitergebildet, die den oben beschriebenen und/ oder den in den Verfahrensansprüchen genannten Merkmalen entsprechen.

Weitere Merkmale, Vorteile und Aufgaben der Erfindung gehen aus der folgenden genauen Beschreibung von Ausführungsbeispielen der Erfindung hervor.

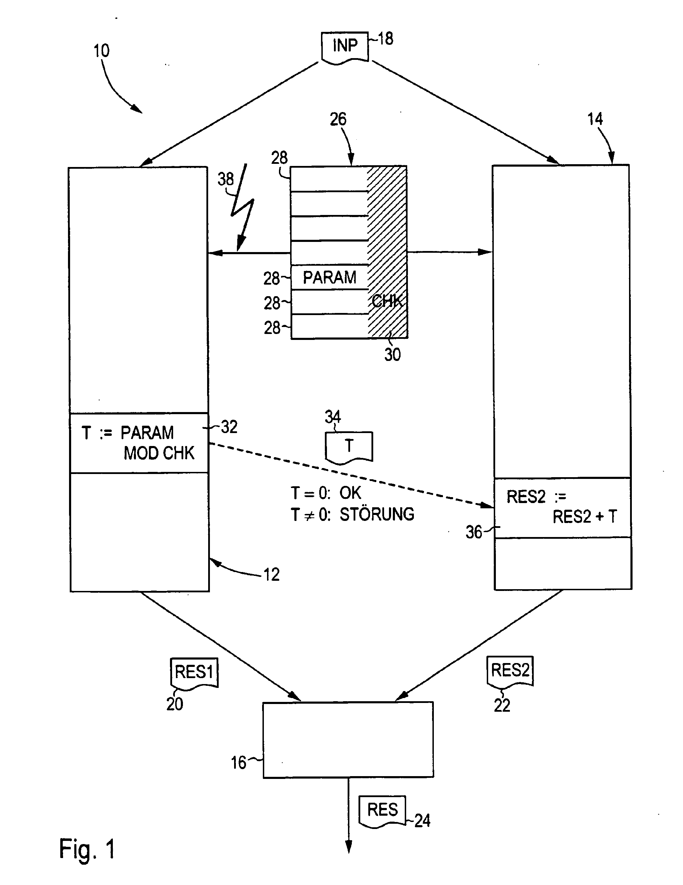

Es wird auf Fig.1 als einzige Zeichnungsfigur verwiesen, die ein Ablauf-und Datenflussdiagramm eines Verfahrens nach einem Ausführungsbeispiel der Erfindung zeigt.

Das in Fig.1 dargestellte kryptographische Verfahren 10 weist einen ersten Verfahrenszweig 12, einen zweiten Verfahrenszweig 14 und einen gemeinsamen Verfahrensabschnitt 16 auf. In den beiden Verfahrenszweigen 12 und 14 wird ein Eingangswert 18 verarbeitet, um ein Ergebnis 20 des ersten Verfahrenszweigs 12 und ein Ergebnis 22 des zweiten Verfahrenszweigs 14 zu erhalten. Die beiden Ergebnisse 20, 22 werden in dem gemeinsamen Verfahrensabschnitt 16 zu einem Ergebnis 24 des gesamten Verfahrens 10 kombiniert. Es versteht sich, dass in den meisten Implementierungen die beiden Verfahrenszweige 12 und 14 nicht echt parallel, sondern nacheinander oder ineinander verzahnt (*interleaved*) ausgeführt werden.

Sowohl bei dem ersten als auch bei dem zweiten Verfahrenszweig 12, 14 wird ein geheimzuhaltender Schlüssel 26 herangezogen, der mehrere Schlüsselparameter 28 aufweist. Insgesamt beinhaltet der Schlüssel 26 einen redundanten Informationsgehalt 30, der eine Integritätsüberprüfung des Schlüssels 26 ermöglicht.

Fig.1 zeigt beispielhaft, dass in dem ersten Verfahrenszweig 12 ein Prüfvorgang 32 vorgesehen ist, der ein Prüfresultat 34 liefert. Das Prüfresultat 34 wird in einem Sicherungsvorgang 36 des zweiten Verfahrenszweigs 14 ausgewertet. Beispielsweise kann der Prüfvorgang 32 aus einer Modulo-Berechnung mit zwei Schlüsselparametern 28 als Operanden bestehen. Wenn diese Schlüsselparameter 28 ohne Rest durcheinander teilbar sind, hat das Prüfresultat 34 den Wert 0. Der Sicherungsvorgang 36 kann beispielsweise aus einer Addition des Prüfresultats 34 mit dem Ergebnis 22 des zweiten Verfahrenszweigs 14 bestehen. Diese Operation beeinflusst das Ergebnis 22 nicht, wenn das Prüfresultat 34 den Wert 0 aufweist, also keine Störung der Verfahrensausführung festgestellt wurde.

Der Ablauf des in Fig.1 gezeigten Verfahrens kann jedoch beispielsweise dadurch von außen gestört werden, dass ein in dem ersten Verfahrenszweig 12 verwendeter Zeiger auf den Schlüssel 26 durch einen Lichtblitz oder einen elektrischen Impuls - Bezugszeichen 38 in Fig. 1 - verfälscht wird. In diesem Fall wird bei der Modulo-Berechnung im Prüfvorgang 32 mit größter Wahrscheinlichkeit ein Rest ungleich 0 ermittelt. Dieses Prüfresultat 34 dient dann im Sicherungsvorgang 36 zur Verfälschung des Ergebnisses 22 des zweiten Verfahrenszweigs 14 und damit auch zur Verfälschung des Ergebnisses 24 des gesamten Verfahrens 10. Der Angreifer, der die Störung 38 verursacht hat, kann daher aus dem Ergebnis 24 keine brauchbaren Informationen ermitteln, weil das Ergebnis 20 durch die Störung 38 manipuliert wurde und das Ergebnis 22 durch den Sicherungsvorgang 36 in quasi-zufälliger Weise verfälscht wurde. Die eingangs genannten Fehleranalysen-Angriffe, die sämtlich auf der Tatsache beruhen, dass auch bei einer gestörten Berechnung einzelne Verfahrenszweige oder Verfahrensabschnitte unverfälscht bleiben, werden damit wirksam verhindert.

Diverse Ausführungsvarianten des in Fig.1 schematisch gezeigten Verfahrens sind vorgesehen. Beispielsweise braucht der Sicherungsvorgang 36 nicht notwendigerweise im zweiten Verfahrenszweig 14 ausgeführt zu werden, sondern er kann - alternativ oder zusätzlich - auch im gemeinsamen Verfahrensabschnitt 16 stattfinden. Ferner können zusätzliche Prüf- und Sicherungsvorgänge in den beiden Verfahrenszweigen 12,14 und/oder in dem gemeinsamen Verfahrensabschnitt 16 vorgesehen sein. Die Verfahrenszweige 12,14 können in beliebiger Weise miteinander sowie mit dem gemeinsamen Verfahrensabschnitt 16 verzahnt werden, und weitere Verfahrenszweige und/oder gemeinsame Verfahrensabschnitte können vorgesehen sein.

In manchen Ausgestaltungen wird jeder Durchlauf durch eine Programmschleife als ein Verfahrenszweig angesehen. Die Erfindung ist daher nicht auf kryptographische Verfahren mit genau zwei Verfahrenszweigen oder mit einer vorab festgelegten Anzahl von Verfahrenszweigen beschränkt. In der allgemeinsten Ausgestaltung der Erfindung brauchen gar keine voneinander abgrenzbaren Verfahrenszweige vorgesehen zu sein.

Es versteht sich ferner, dass in Ausführungsalternativen die unterschiedlichsten Rechenoperationen als Prüfvorgang 32 eingesetzt werden können. Der Prüfvorgang 32 ist nicht auf eine Integritätsüberprüfung des Schlüssels 26 beschränkt, sondern kann - alternativ oder zusätzlich - andere Eingabewerte und/oder Berechnungsvorgänge während der Verfahrensausführung umfassen. In bevorzugten Ausgestaltungen werden jedoch Fallunterscheidungen und bedingte Sprünge beim Prüfvorgang 32 vermieden, so dass keine Manipulation durch weitere Störungsimpulse möglich ist.

Ferner können in Ausführungsalternativen beliebige andere Operationen im Sicherungsvorgang 36 eingesetzt werden. Auch hier werden jedoch in bevorzugten Ausführungsformen Fallunterscheidungen und bedingte Sprünge aus den gerade genannten Gründen vermieden. Der Sicherungsvorgang ist nicht auf das Ausführen arithmetischer Operationen mit Datenwerten beschränkt, sondern kann auch Adress- und/oder Zeigerarithmetik umfassen. Insbesondere kann in manchen Ausgestaltungen das Prüfresultat zum Berechnen einer Adresse verwendet werden, die dann als Quelladresse für einen Kopiervorgang des Ergebnisses zu einer Zieladresse eingesetzt wird. Ferner versteht sich, dass in Ausführungsalternativen weitere Prüfresultate anderer kryptographischer Verfahren in das vorliegend beschriebene Verfahren eingehen können.

Das Verfahren wird in den hier beschriebenen Ausführungsbeispielen auf einem tragbaren Datenträger ausgeführt, der in an sich bekannter Weise einen Prozessor, einen Speicher mit mehreren Speicherfeldern - z.B. ROM, EEPROM und RAM - und eine Schnittstelle zur drahtlosen oder drahtgebundenen Kommunikation mit einem externen Terminal aufweist. Der Speicher enthält die von dem Verfahren benötigten Daten sowie Programmbefehle, die den Prozessor zur Ausführung des Verfahrens veranlassen.

In einem konkreten Anwendungsbeispiel wird das in Fig.1 schematisch und verkürzt gezeigte Verfahren bei einer RSA-CRT-Berechnung eingesetzt. Aus Gründen der besseren Verständlichkeit wird zunächst ein Vergleichsbeispiel beschrieben, das zwar nicht identisch aus WO 2004/0342411 A1 bekannt, aber an das dort erläuterte Verfahren angelehnt ist. Es wird daher auf die ausführliche Darstellung in WO 2004/ 0342411 A1 verwiesen, die hiermit durch Bezugnahme in das vorliegende Dokument aufgenommen wird. Ein geringfügiger notationeller Unterschied besteht in der Tatsache, dass die in WO 2004/0342411 A1 als *dp* und *dq* bezeichneten Werte die Sicherungswerte *sp* und *sq* beinhalten, während im vorliegenden Dokument die Sicherungswerte *sp* und *sq* als multiplikative Faktoren in den Schlüsselparametern gesondert aufgeführt sind.

Sowohl das Vergleichsbeispiel als auch das unten noch zu beschreibende Ausführungsbeispiel der Erfindung nutzen einen geheimen RSA-CRT-Schlüssel mit den Schlüsselparametern *p, q, (dp ·sp), (dq ·sq), pinv, sp* und *sq*. Hierbei sind *p* und *q* die beiden geheimen RSA-Primfaktoren, und *pinv* ist ein durch *pinv* := $1/p$ mod *q* definierter CRT-Koeffizient. Die Werte *dp* und *dq* sind CRT-Exponenten, die durch *dp* := *d* mod (*p*-1) und *dq* := *d* mod (*q*-1) definiert sind; hierbei ist *d* der private RSA-Exponent, der als modulares Inverses des öffentlichen Exponenten *e* modulo (*p*-1) · (*q*-1) definiert ist, wobei der öffentliche Exponent *e* bei der Schlüsselerzeugung als Zufallszahl bestimmt wurde, die

kleiner als $p \cdot q$ und teilerfremd zum Wert $(p\text{-}1) \cdot (q\text{-}1)$ ist. Die Werte sp und sq sind zufällig gewählte Sicherungswerte; offensichtlich muss bei einem nicht verfälschten Schlüssel gelten, dass der Schlüsselparameter $(dp \cdot sp)$ ohne Rest durch den Sicherungswert sp teilbar ist und der Schlüsselparameter $(dq \cdot sq)$ ohne Rest durch den Sicherungswert sq teilbar ist.

Zur Entschlüsselung einer verschlüsselten Nachricht x unter Verwendung des gerade beschriebenen privaten Schlüssels werden bei dem Vergleichsbeispiel die folgenden RSA-CRT-Berechnungsschritte ausgeführt, die als Ergebnis y die entschlüsselte Nachricht liefern:

$$\text{SETZE} \quad xp := x \bmod p \quad \text{UND} \quad xq := x \bmod q \qquad (1)$$

$$\text{SETZE} \quad dp := (dp \cdot sp) \,/\, sp \quad \text{UND} \quad Tp := (dp \cdot sp) \bmod sp \qquad (2)$$

$$\text{PRÜFE ZUSICHERUNG} \quad Tp = 0 \qquad (3)$$

$$\text{SETZE} \quad yp := xp\,^\wedge dp \bmod p \qquad (4)$$

$$\text{SETZE} \quad dq := (dq \cdot sq) \,/\, sq \quad \text{UND} \quad Tq := (dq \cdot sq) \bmod sq \qquad (5)$$

$$\text{PRÜFE ZUSICHERUNG} \quad Tq = 0 \qquad (6)$$

$$\text{SETZE} \quad yq := xq\,^\wedge dq \bmod q \qquad (7)$$

$$\text{SETZE} \quad Tpi := p \cdot pinv \bmod q \qquad (8)$$

$$\text{PRÜFE ZUSICHERUNG} \quad Tpi = 1 \qquad (9)$$

$$\text{SETZE} \quad y := yp + ( (yq - yp) \cdot pinv \bmod q ) \cdot p \qquad (10)$$

$$\text{GIB} \quad y \quad \text{AUS} \qquad (11)$$

Die Zusicherungsprüfungen in den Schritten (3), (6) und (9) sind als Fallunterscheidungen implementiert, die je einen bedingten Fehleraussprung aufweisen. Hier besteht die eingangs beschriebene Angriffsmöglichkeit durch Verursachen einer weiteren Störung, die einen an sich vorgesehenen Fehleraussprung unterbindet.

Das im folgenden dargestellte Ausführungsbeispiel der Erfindung unterscheidet sich von dem Vergleichsbeispiel dadurch, dass die Zusicherungsprüfungen in den Schritten (3), (6) und (9) durch je einen Sicherungsvorgang in den modifizierten Schritten (3'), (6') und (9') ersetzt sind. Die folgenden Verfahrensschritte werden ausgeführt:

$$\text{SETZE} \quad xp := x \bmod p \quad \text{UND} \quad xq := x \bmod q \qquad (1)$$

$$\text{SETZE} \quad dp := (dp \cdot sp) \,/\, sp \quad \text{UND} \quad Tp := (dp \cdot sp) \bmod sp \qquad (2)$$

$$\text{SETZE} \quad xq := xq + Tp \tag{3'}$$

$$\text{SETZE} \quad yp := xp{\char`\^}dp \bmod p \tag{4}$$

$$\text{SETZE} \quad dq := (dq \cdot sq) / sq \quad \text{UND} \quad Tq := (dq \cdot sq) \bmod sq \tag{5}$$

$$\text{SETZE} \quad yp := yp + Tq \tag{6'}$$

$$\text{SETZE} \quad yq := xq{\char`\^}dq \bmod q \tag{7}$$

$$\text{SETZE} \quad Tpi := p \cdot pinv \bmod q \tag{8}$$

$$\text{SETZE} \quad yp := yp \cdot Tpi \tag{9'}$$

$$\text{SETZE} \quad y := yp + (\,(yq - yp) \cdot pinv \bmod q\,) \cdot p \tag{10}$$

$$\text{GIB} \quad y \quad \text{AUS} \tag{11}$$

In dem Verfahren stellen der erste Teil von Schritt (1) sowie die Schritte (2), (4) und (6') den ersten Verfahrenszweig dar, nämlich denjenigen, in dem ausschließlich der erste Primfaktor $p$ und damit verbundene Schlüsselparameter verwendet werden. Entsprechend bilden der zweite Teil von Schritt (1) und die Schritte (3'), (5) und (7) den zweiten Verfahrenszweig, in den ausschließlich der zweite Primfaktor $q$ und damit verbundene Schlüsselparameter eingehen. Die Schritte (8) bis (11) bilden den gemeinsamen Verfahrensabschnitt.

Schritt (2) im ersten Verfahrenszweig umfaßt unter anderem eine Integritätsüberprüfung der beiden Schlüsselparameter $(dp \cdot sp)$ und $sp$, als deren Ergebnis das Prüfresultat $Tp$ ermittelt wird. Bei einem nicht verfälschten Schlüssel wird $Tp = 0$ erwartet, während ein Wert $Tp \neq 0$ auf eine gestörte Verfahrensausführung - beispielsweise eine Störung beim Zugriff auf den geheimen Schlüssel - hinweist. Das so ermittelte Prüfresultat geht dann in dem Sicherungsvorgang von Schritt (3') in den zweiten Verfahrenszweig ein. Falls $Tp \neq 0$ ist, werden dort das Ergebnis $xq$ des zweiten Verfahrenszweigs und damit auch das Gesamtergebnis y auf quasi-zufällige Weise verfälscht.

Entsprechend wird in Schritt (5) im zweiten Verfahrenszweig das Prüfresultat Tq ermittelt, das in Schritt (6') in den ersten Verfahrenszweig eingeht.

Schritt (8) im gemeinsamen Verfahrensabschnitt betrifft eine weitere Integritätsüberprüfung der Schlüsselparameter $p$ und pinv. Hier wird bei einem ungestörten Verfahrensablauf ein Wert $Tpi = 1$ als Prüfresultat erwartet. Bei diesem Wert verändert sich in dem Sicherungsvorgang von Schritt (9') der vom ersten Verfahrenszweig erhaltene Wert $yp$ nicht, während bei Vorliegen einer Störung - dann gilt $Tpi \neq 1$ - der Wert $yp,$ der seinerseits in das Ergebnis y eingeht, verfälscht wird. Das Ergebnis y des Verfahrens wird dann für den Angreifer unbrauchbar, weil keines der effektiv verwendeten Teilergebnisse $yp$ und $yp$ Informationen enthält, die durch eine Fehleranalyse verwertbar wären.

Es versteht sich, dass die hier beschriebenen Einzelheiten lediglich beispielhafter Natur sind. Abwandlungen und Kombinationen, insbesondere mit den weiteren in WO 2004/0342411 A1 beschriebenen Sicherungstechniken, sind für den Fachmann offensichtlich.

**Patentansprüche**

1. Kryptographisches Verfahren (10), das gegen einen kryptographischen Angriff geschützt ist, bei dem die Ausführung des Verfahrens (10) durch äußere Einwirkung gestört (38) und mindestens ein Ergebnis (24) der so gestörten Verfahrensausführung ausgewertet wird, wobei

- mindestens ein Prüfresultat (34) ermittelt wird, das bei einer gestörten Verfahrensausführung mindestens einen anderen Wert als bei einer ungestörten Verfahrensausführung aufweist, und
- das mindestens eine Prüfresultat (34) in die Bestimmung des mindestens einen Ergebnisses (24) derart eingeht, dass das Ergebnis (24) verfälscht wird, wenn das Prüfresultat (34) auf eine gestörte Verfahrensausführung hinweist,

**dadurch gekennzeichnet, dass**

- bei dem Verfahren (10) ein Schlüssel (26) herangezogen wird, und dass bei der Ermittlung des Prüfresultats (34) eine Integritätsüberprüfung des Schlüssels (26) erfolgt,
- der Schlüssel (26) einen redundanten Informationsgehalt (30) aufweist, der zumindest zum Teil für die Integritätsüberprüfung herangezogen wird und
- bei der Integritätsüberprüfung ermittelt wird, ob mindestens zwei Schlüsselparameter (28) des Schlüssels (26) in einer vorbestimmten Beziehung zueinander stehen

2. Verfahren nach Anspruch 1, **dadurch gekennzeichnet, dass** das Prüfresultat (34) ein numerisches Prüfresultat ist.

3. Verfahren nach Anspruch 1 oder Anspruch 2, **dadurch gekennzeichnet, dass** das Prüfresultat (34) durch mindestens eine arithmetische Operation ermittelt wird.

4. Verfahren nach einem der Ansprüche 1 bis 3, **dadurch gekennzeichnet, dass** die Ermittlung des Prüfresultats (34) frei von bedingten Sprungbefehlen ist.

5. Verfahren nach einem der Ansprüche 1 bis 4, **dadurch gekennzeichnet, dass** das Prüfresultat (34) als Operand mindestens einer arithmetischen Operation in die Bestimmung des Ergebnisses (24) eingeht.

6. Verfahren nach einem der Ansprüche 1 bis 5, **dadurch gekennzeichnet, dass** das Prüfresultat (34) in die Bestimmung eines auf das Ergebnis (24) weisenden Adress- oder Indexwertes eingeht.

7. Verfahren nach einem der Ansprüche 1 bis 6, **dadurch gekennzeichnet, dass** das Prüfresultat (34) in mindestens einem Prüfvorgang (32) ermittelt und in mindestens einem Sicherungsvorgang (36) herangezogen wird.

8. Verfahren nach Anspruch 7, **dadurch gekennzeichnet, dass** der Sicherungsvorgang (36) frei von bedingten Sprungbefehlen ist.

9. Verfahren nach Anspruch 7 oder Anspruch 8, **dadurch gekennzeichnet, dass** das Ergebnis (24) durch den Sicherungsvorgang (36) nicht verändert wird, wenn das Prüfresultat (34) auf eine ungestörte Verfahrensausführung hinweist.

10. Verfahren nach einem der Ansprüche 7 bis 9, **dadurch gekennzeichnet, dass** das Verfahren (10) einen ersten Verfahrenszweig (12) und einen zweiten Verfahrenszweig (14) aufweist, wobei der Prüfvorgang (32) in dem ersten Verfahrenszweig (12) ausgeführt wird und der Sicherungsvorgang (36) in dem zweiten Verfahrenszweig (14) oder in einem gemeinsamen Verfahrensabschnitt (16) ausgeführt wird.

11. Verfahren nach Anspruch 10, **dadurch gekennzeichnet, dass** bei dem Verfahren (10) ein Schlüssel (26) mit mindestens einem ersten und einem zweiten Schlüsselparameter (28) herangezogen wird, wobei der erste Schlüsselparameter (28) nur in dem ersten Verfahrenszweig (12) und der zweite Schlüsselparameter (28) nur in dem zweiten Verfahrenszweig (14) verwendet wird.

12. Verfahren nach einem der Ansprüche 1 bis 11, **dadurch gekennzeichnet, dass** das Verfahren (10) eine Entschlüsselung oder Signaturerzeugung bei einem RSA-Verfahren, insbesondere einem RSA-CRT-Verfahren, ist.

13. Computerprogrammprodukt, das Programmbefehle aufweist, um einen Prozessor zu veranlassen, ein Verfahren mit den Merkmalen eines der Ansprüche 1 bis 12 auszuführen.

14. Tragbarer Datenträger, insbesondere Chipkarte oder Chipmodul, der zur Ausführung eines Verfahrens mit den Merkmalen eines der Ansprüche 1 bis 12 eingerichtet ist.

**EP 1 760 929 B1**

**Claims**

1. Cryptographic method (10) protected against a cryptographic attack in which the execution of the method (10) is disturbed by an external influence (38) and at least one result (24) of the method execution thus disturbed is evaluated, wherein

- at least one check result (34) is determined which, in the case of a disturbed method execution, has at least one different value than in the case of an undisturbed method execution, and
- the at least one check result (34) contributes to the determination of the at least one result (24) in such a way that the result (24) is corrupted if the check result (34) suggests a disturbed method execution,

**characterised in that**

- a key (26) is used in the method (10), and that an integrity check of the key (26) takes place during the determination of the check result (34),
- the key (26) has a redundant information content (30) which is used at least in part for the integrity check, and
- it is determined in the integrity check whether at least two key parameters (28) of the key (26) are in a predetermined relationship with each other.

2. Method according to claim 1, **characterised in that** the check result (34) is a numerical check result.

3. Method according to claim 1 or claim 2, **characterised in that** the check result (34) is determined by at least one arithmetic operation.

4. Method according to any one of the claims 1 to 3, **characterised in that** determination of the check result (34) is free from conditional jump instructions.

5. Method according to any one of the claims 1 to 4, **characterised in that** the check result (34) contributes to the determination of the result (24) as an operand of at least one arithmetic operation.

6. Method according to any one of the claims 1 to 5, **characterised in that** the check result (34) contributes to the determination of an address or index value pointing to the result (24).

7. Method according to any one of the claims 1 to 6, **characterised in that** the check result (34) is determined in at least one checking process (32) and is used in at least one safeguarding process (36).

8. Method according to claim 7, **characterised in that** safeguarding process (36) is free from conditional jump instructions.

9. Method according to claim 7 or claim 8, **characterised in that** the result (24) is not altered by the safeguarding process (36) if the check result (34) suggests an undisturbed method execution.

10. Method according to any one of the claims 7 to 9, **characterised in that** the method (10) comprises a first method branch (12) and a second method branch (14), wherein the checking process (32) is executed in the first method branch (12) and the safeguarding process (36) is executed in the second method branch (14) or in a joint method step (16).

11. Method according to claim 10, **characterised in that** a key (26) with at least a first and a second key parameter (28) is used in the method (10), wherein the first key parameter (28) is used only in the first method branch (12) and the second key parameter (28) only in the second method branch (14).

12. Method according to any one of the claims 1 to 11, **characterised in that** the method (10) is a decryption or signature generation in an RSA method, in particular in an RSA-CRT method.

13. Computer program product comprising program instructions for causing a processor to execute a method having the features of one of the claims 1 to 12.

14. Portable data carrier, in particular chip card or chip module, which is adapted for executing a method having the features of one of the claims 1 to 12.

**Revendications**

1. Procédé cryptographique (10) qui est protégé contre une attaque cryptographique, avec lequel l'exécution du procédé (10) est perturbée par une influence extérieure (38) et au moins une conséquence (24) de l'exécution du procédé ainsi perturbée est évaluée, sachant que

   - il est établi au moins un résultat de contrôle (34) qui, en cas d'une exécution perturbée du procédé, présente au moins une autre valeur qu'en cas d'une exécution non perturbée du procédé, et
   - le ou les résultats de contrôle (34) entrent dans la détermination de la ou des conséquences (24) de manière telle que la conséquence (24) soit faussée si le résultat de contrôle (34) indique une exécution perturbée du procédé,

   **caractérisé en ce que**

   - une clé (26) est mise à contribution avec le procédé (10) et **en ce qu'**une vérification d'intégrité de la clé (26) est effectuée lors de l'établissement du résultat de contrôle (34),
   - la clé (26) présente un contenu d'information redondant (30) qui est mis à contribution au moins en partie pour la vérification d'intégrité et
   - lors de la vérification d'intégrité, il est établi si au moins deux paramètres (28) de la clé (26) ont une relation prédéfinie entre eux.

2. Procédé selon la revendication 1, **caractérisé en ce que** le résultat de contrôle (34) est un résultat de contrôle numérique.

3. Procédé selon la revendication 1 ou 2, **caractérisé en ce que** le résultat de contrôle (34) est établi par au moins une opération arithmétique.

4. Procédé selon une des revendications 1 à 3, **caractérisé en ce que** l'établissement du résultat de contrôle (34) est exempt d'instructions de saut conditionnelles.

5. Procédé selon une des revendications 1 à 4, **caractérisé en ce que** le résultat de contrôle (34) est mis à contribution en tant qu'opérande dans au moins une opération arithmétique dans la détermination de la conséquence (24).

6. Procédé selon une des revendications 1 à 5, **caractérisé en ce que** le résultat de contrôle (34) entre dans la détermination d'une valeur d'adresse ou d'index montrant la conséquence (24).

7. Procédé selon une des revendications 1 à 6, **caractérisé en ce que** le résultat de contrôle (34) est établi dans au moins un processus de contrôle (32) et est mis à contribution dans au moins un processus de sécurité (36).

8. Procédé selon la revendication 7, **caractérisé en ce que** le processus de sécurité (36) est exempt d'instructions de saut conditionnelles.

9. Procédé selon la revendication 7 ou 8, **caractérisé en ce que** la conséquence (24) n'est pas modifiée par le processus de sécurité (36) lorsque le résultat de contrôle (34) indique une exécution non perturbée du procédé.

10. Procédé selon une des revendications 7 à 9, **caractérisé en ce que** le procédé (10) comporte une première branche de procédé (12) et une deuxième branche de procédé (14), le processus de contrôle (32) étant exécuté dans la première branche du procédé (12) et le processus de sécurité (36) étant exécuté dans la deuxième branche du procédé (14) ou dans une section de procédé commune (16).

11. Procédé selon la revendication 10, **caractérisé en ce que** le procédé (10) met à contribution une clé (26) ayant au moins des premier et deuxième paramètres de clé (28), le premier paramètre de clé (28) étant employé uniquement dans la première branche du procédé (12) et le deuxième paramètre de clé (28) étant employé uniquement dans la deuxième branche du procédé (14).

**EP 1 760 929 B1**

12. Procédé selon une des revendications 1 à 11, **caractérisé en ce que** le procédé (10) est un déchiffrement ou une génération de signature lors d'un procédé RSA, en particulier lors d'un procédé RSA-CRT.

13. Produit de programme informatique, qui comporte des instructions de programme faisant en sorte qu'un processeur exécute un procédé ayant les caractéristiques d'une des revendications 1 à 12.

14. Support de données portable, en particulier une carte à puce ou un module à puce, qui est réalisé pour exécuter un procédé ayant les caractéristiques d'une des revendications 1 à 12.

T = 0: OK
T ≠ 0: STÖRUNG

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4405829 A
- US 5991415 A
- DE 102004001659
- WO 20040342411 A1